# EUROPÄISCHE PATENTANMELDUNG

(11) **EP 4 368 599 A1**
(43) Veröffentlichungstag der Anmeldung: **15.05.2024**
(21) Anmeldenummer: 22206296.0
(22) Anmeldetag: 09.11.2022
(51) Int. Cl.: C04B 41/62, A01G 24/15

(54) **SCHÜTTGUT, VERFAHREN ZUR HERSTELLUNG DES SCHÜTTGUTES, VERWENDUNG DES SCHÜTTGUTES SOWIE VERWENDUNG EINES ORGANISCHEN FARBSTOFFS**

(71) Anmelder: Knauf Performance Materials GmbH, 44147 Dortmund (DE)
(72) Erfinder: MÜHLENWEG, Dirk, 48157 Münster (DE)
(74) Vertreter: Berkenbrink, Kai-Oliver

(57) **Zusammenfassung**

Die Erfindung betrifft ein Schüttgut, ein Verfahren zur Herstellung des Schüttgutes, eine Verwendung des Schüttgutes sowie eine Verwendung eines organischen Farbstoffs.

## Beschreibung

Die Erfindung betrifft ein Schüttgut, ein Verfahren zur Herstellung des Schüttgutes, eine Verwendung des Schüttgutes sowie eine Verwendung eines organischen Farbstoffs.

Unter einem "Schüttgut" im Sinne der Erfindung wird gemäß allgemeiner Nomenklatur ein Gemenge aus Partikeln verstanden, das in einer schüttfähigen Form vorliegt. Die Korngröße solcher Partikel in einem Schüttgut ist grundsätzlich beliebig, also beispielsweise mehlfein, körnig oder stückig.

Typische Schüttgüter sind beispielsweise Gemenge aus Sand, Kies oder mineralischen Rohstoffen.

Ein typischer Bestandteil von Schüttgütern ist geblähter Perlit. Bei Perlit handelt es sich um ein Gestein in Form eines vulkanischen Glases. Durch Erhitzen auf Temperaturen bis etwa 1.000°C bläht sich Perlit auf. Nach Abkühlen verbleibt er im geblähten Zustand. Ein solch geblähter, abgekühlter Perlit wird als geblähter Perlit bezeichnet. Geblähter Perlit weist eine hohe offene Porosität mit einer geringen Schüttdichte und einer geringen Wärmeleitfähigkeit auf. Aufgrund dieser Eigenschaften wird geblähter Perlit beispielsweise zur Wärmedämmung im Gebäudebau verwendet.

Geblähter Perlit weist eine weiße Farbe auf. Für zahlreiche Anwendungen ist es gewünscht, geblähten Perlit zu färben, beispielsweise zu dekorativen Zwecken. Aufgrund seiner glasigen Oberflächenbeschaffenheit erweist es sich jedoch als schwierig, geblähten Perlit mit einem beständigen Farbauftrag zu versehen. So wird eine auf geblähten Perlit aufgetragene Farbe insbesondere durch flüssige Medien, beispielsweise Wasser, sehr leicht wieder entfernt. Es hat sich bisher als schwer bis unmöglich erwiesen, geblähten Perlit mit einem beständigen Farbauftrag zu versehen. Insbesondere steht bislang keine Technologie zur Verfügung, durch welche geblähter Perlit beständig mit einem Farbstoff versehen werden kann, insbesondere derart beständig mit einem Farbstoff versehen werden kann, dass der Farbstoff nicht ohne Weiteres durch ein flüssiges Medium, wie beispielsweise Wasser, wieder entfernbar ist.

Der Erfindung liegt die Aufgabe zugrunde, ein geblähter Perlit umfassendes Schüttgut zur Verfügung zu stellen, in dem der geblähte Perlit mit einem beständig auf den geblähten Perlit aufgetragenen Farbstoff versehen ist. Insbesondere liegt der Erfindung die Aufgabe zugrunde, einen solch beständigen Farbauftrag durch einen Farbstoff zur Verfügung zu stellen, der durch ein flüssiges Medium, insbesondere Wasser, nicht einfach wieder entfernbar ist.

Der Erfindung liegt ferner die Aufgabe zugrunde, ein Verfahren zur Herstellung des Schüttgutes zur Verfügung zu stellen.

Zur Lösung der Aufgabe wird erfindungsgemäß zur Verfügung gestellt ein Schüttgut, umfassend die folgenden Merkmale:
Körner aus geblähtem Perlit; wobei
zumindest ein Anteil der Körner aus geblähtem Perlit einen Farbstoff aufweist; wobei
der Farbstoff zumindest teilweise die Oberfläche der Körner aus geblähtem Perlit bedeckt, ein organischer Farbstoff ist und eine Atommasse von unter 2.000 Dalton aufweist.

Die Erfindung beruht unter anderem auf der überraschenden Grunderkenntnis, dass sich geblähter Perlit mit einem beständigen, dauerhaften Farbauftrag versehen lässt, wenn hierfür ein organischer Farbstoff einer spezifischen Atommasse verwendet wird. Erfindungsgemäß hat sich herausgestellt, dass sich geblähter Perlit insbesondere dann mit einem beständigen Farbauftrag versehen lässt, wenn ein organischer Farbstoff mit einer Atommasse von unter 2.000 Dalton verwendet wird. Worauf der technische Effekt beruht, aufgrund dessen sich durch einen Farbstoff mit einer Atommasse von unter 2.000 Dalton ein beständiger Farbauftrag auf geblähtem Perlit erzielen lässt, konnte noch nicht abschließend geklärt werden. Die Erfinder vermuten, dass geblähter Perlit oberflächenaktive Eigenschaften aufweist, die in eine solche Wechselwirkung mit einem organischen Farbstoff dieser spezifischen Atommassen treten, dass der Farbstoff fest an die Oberfläche des geblähten Perlits gebunden ist.

Im Rahmen der Erfindung hat sich ferner herausgestellt, dass die Beständigkeit des Farbauftrages reduziert werden kann, wenn der organische Farbstoff eine Atommasse unter 300 Dalton aufweist. Bevorzugt weist der Farbstoff damit eine Atommasse von unter 2.000 Dalton und von über 200 Dalton auf.

Erfindungsgemäß hat sich ferner herausgestellt, dass sich der Farbauftrag als zunehmend beständig erweist, soweit er zunehmend dem Bereich einer Atommasse von über 300 Dalton und von unter 1.000 Dalton angenähert ist. Weiter bevorzugt weist der organische Farbstoff danach eine Atommasse von unter 1.500 Dalton und von über 200 Dalton und noch bevorzugter von unter 1.000 Dalton und von über 300 Dalton auf.

Als Farbstoff im Sinne der Erfindung wird gemäß allgemeiner Nomenklatur ein Farbmittel verstanden, das in einem Lösungsmittel löslich ist. Bevorzugt sind die für die Erfindung verwendeten Farbstoffe wasserlöslich.

Bevorzugt umfasst der Farbstoff ein organisches Chromophor.

Grundsätzlich kann im Rahmen der Erfindung ein beliebiger organischer Farbstoff mit der erfindungsgemäßen Atommasse Verwendung finden.

Nach einer besonders bevorzugten Ausführungsform umfasst der Farbstoff ein organisches Chromophor auf Basis wenigstens einer der folgenden Substanzen: polyzyklische aromatische Kohlenwasserstoffe, heterozyklische aromatische Kohlenwasserstoffe, Chinone, Naphthochinone, Polyphenole, Chinacridone, Indigoide, Dioxacine, Phtalocyanine oder Polyanilin. Erfindungsgemäß hat sich herausgestellt, dass der geblähte Perlit mit einem besonders beständigen Farbauftrag versehen werden kann, soweit der Farbstoff ein organisches Chromophor auf Basis wenigstens einer dieser Substanzen umfasst.

Besonders bevorzugt sind die polyzyklischen aromatischen Kohlenwasserstoffe und die heterozyklischen aromatischen Kohlenwasserstoffe aus der folgenden Gruppe ausgewählt: Naphthalin, Anthracen, Anthrachinone, Benzanthron, Isoindolin, Chinacridone, Indigoide oder Dioxazine.

Ganz besonders bevorzugt liegen die polyzyklischen aromatischen Kohlenwasserstoffe in Form von Anthrachinonen vor. Erfindungsgemäß hat sich herausgestellt, dass sich insbesondere durch die Verwendung eines Farbstoffs, der ein organisches Chromophor auf Basis von Anthrachinonen umfasst, eine dauerhafte Färbung von geblähtem Perlit erzielen lässt.

Erfindungsgemäß wurde festgestellt, dass die Beständigkeit eines Farbstoffs auf geblähtem Perlit reduziert werden kann, wenn der Chromophor auf einem polyzyklischen aromatischen Kohlenwasserstoff basiert, der durch Azogruppen verbundene Aromaten umfasst. Bevorzugt sind daher als polyzyklische aromatische Kohlenwasserstoffe Farbstoffe vorgesehen, die keine durch Azogruppen verbundene Aromaten umfassen.

Neben Farbstoffen auf Basis eines Anthrachinone umfassenden Chromophors haben sich insbesondere auch Farbstoffe auf Basis eines Polyphenole umfassenden Chromophors als besonders dauerhafte Farbstoffe erwiesen. Nach einer bevorzugten Ausführungsform ist daher vorgesehen, dass der Farbstoff ein organisches Chromophor auf Basis von Polyphenolen umfasst.

Nach einer bevorzugten Ausführungsform ist vorgesehen, dass der Farbstoff ein organisches Chromophor auf Basis wenigstens einer der folgenden Substanzen umfasst: Anthrachinone oder Polyphenole.

Soweit Farbstoffe auf Basis eines Polyphenole umfassenden Chromophors vorgesehen sind, kann insbesondere ein Farbstoff auf Basis Ligninsulfonat vorgesehen sein. Erfindungsgemäß wurde festgestellt, dass insbesondere auf Basis von Ligninsulfonat ein dauerhafter Farbauftrag auf geblähtem Perlit erstellt werden kann, soweit das Ligninsulfonat eine Atommasse im erfindungsgemäßen spezifischen Bereich aufweist.

Der Farbstoff kann die Körner aus geblähtem Perlit teilweise oder vollständig bedecken. Bevorzug bedeckt der Farbstoff die Oberfläche der Körner aus geblähtem Perlit vollständig.

Die Konzentration des Farbstoffs auf den Körnern aus geblähtem Perlit ist grundsätzlich beliebig. Erfindungsgemäß hat sich jedoch herausgestellt, dass ab einer Konzentration von etwa 30 Masse-% die Dauerhaftigkeit des Farbauftrages reduziert werden kann. Die Erfinder vermuten, dass ab einer solchen Konzentration der Farbstoff nicht mehr in unmittelbare Wechselwirkung mit der Oberfläche der Körner aus geblähtem Perlit treten kann, so dass eine mögliche, den Farbstoff auf der Oberfläche des geblähten Perlits stabilisierende Wechselwirkung zwischen dem Farbstoff und der Oberfläche des geblähten Perlits nicht mehr gegeben ist. Nach einer bevorzugten Ausführungsform ist daher vorgesehen, dass die Körner aus geblähtem Perlit den Farbstoff in einer Konzentration von maximal 30 Masse-%, bezogen auf die Gesamtmasse der Körner aus geblähtem Perlit mit dem Farbstoff, aufweisen.

Ferner wurde erfindungsgemäß festgestellt, dass ein erfindungsgemäßer Farbstoff bei einer Konzentration unter 0,5 Masse-% regelmäßig in einer zu geringen Konzentration vorliegt, um einen Farbeindruck zu erzeugen. Nach einer Fortbildung des vorstehenden Erfindungsgedankens kann daher vorgesehen sein, dass die Körner aus geblähtem Perlit den Farbstoff in einer Konzentration im Bereich von 0,5 bis 30 Masse-%, bezogen auf die Gesamtmasse der Körner aus geblähtem Perlit mit dem Farbstoff, aufweisen. Besonders bevorzugt weisen die Körner aus geblähtem Perlit den Farbstoff in einer Konzentration im Bereich von 1 bis 25 Masse-% auf, bezogen auf die Gesamtmasse der Körner aus geblähtem Perlit mit dem Farbstoff. Erfindungsgemäß hat sich herausgestellt, dass der Farbstoff in diesem Bereich einen optisch besonders gut wahrnehmbaren und gleichzeitig dauerhaften Farbauftrag erzeugt.

Nach einer bevorzugten Ausführungsform ist vorgesehen, dass der Farbstoff in Form eines Beizen-, Küpen-, Reaktiv-, Direkt-, Dispersions- oder Metallkomplexfarbstoffes auf die Körner aus geblähtem Perlit aufgetragen ist. Erfindungsgemäß wurde festgestellt, dass sich der Farbstoff mittels eines dieser Auftragsverfahren besonders einfach und dauerhaft auf die Körner aus geblähtem Perlit auftragen lässt.

Bei den Körnern aus geblähtem Perlit, auf die der Farbstoff aufgetragen ist, kann es sich grundsätzlich um Körner aus geblähtem Perlit gemäß dem Stand der Technik handeln. Bevorzugt weisen die Körner aus geblähtem Perlit zu wenigstens 90 Masse-%, bezogen auf die Masse der Körner aus geblähtem Perlit mit dem Farbstoff, eine Korngröße unter 6 mm auf.

Erfindungsgemäß hat sich herausgestellt, dass sich der erfindungsgemäße Farbstoff teilweise nur schlecht auf Körner aus geblähtem Perlit auftragen lässt, wenn deren Korngröße zu klein beziehungsweise zu groß ist. Insbesondere kann der Farbstoff in einer ungewünschten Konzentration in den Körnern aus geblähtem Perlit vorliegen, wenn deren Korngröße unter 1 mm oder über 5 mm vorliegt. Bevorzugt ist daher vorgesehen, dass die Körner aus geblähtem Perlit zu wenigstens 25 Masse-%, noch bevorzugter zu wenigstens 40 Masse-%, eine Korngröße im Bereich von 1 bis 5 mm aufweisen, bezogen auf die Gesamtmasse der Körner aus geblähtem Perlit, die den Farbstoff aufweisen.

Das erfindungsgemäße Schüttgut kann neben den Körnern aus geblähtem Perlit, die den erfindungsgemäßen Farbstoff aufweisen, auch beliebige weitere Partikel, insbesondere auch andere Körner aus geblähtem Perlit umfassen, die den erfindungsgemäßen Farbstoff nicht aufweisen.

Gegenstand der Erfindung ist auch ein Verfahren zur Herstellung des hierin beschriebenen erfindungsgemäßen Schüttgutes, umfassend die folgenden Schritte:
Zurverfügungstellung von Körnern aus geblähtem Perlit;
Zurverfügungstellung eines organischen Farbstoffs mit einer Atommasse von unter 2.000 Dalton;
Auftragen des Farbstoffs auf die Körner aus geblähtem Perlit.

Die für das Verfahren zur Verfügung gestellten Körner aus geblähtem Perlit können die vorstehenden Merkmale der Körner aus geblähtem Perlit des erfindungsgemäßen Schüttgutes aufweisen.

Der für das Verfahren zur Verfügung gestellte, organische Farbstoff mit einer Atommasse von unter 2.000 Dalton kann die vorstehenden Merkmale des Farbstoffs des erfindungsgemäßen Schüttgutes aufweisen.

Der Farbstoff kann grundsätzlich durch ein beliebiges aus dem Stand der Technik bekanntes Verfahren auf die Körner aus geblähtem Perlit aufgetragen werden. Bevorzugt wird der Farbstoff derart auf die Körner aus geblähtem Perlit aufgetragen, dass er zumindest teilweise die Oberfläche der Körner aus geblähtem Perlit bedeckt, bevorzugt vollständig die Oberfläche der Körner aus geblähtem Perlit bedeckt.

Beispielsweise kann der Farbstoff mittels Sprühen, Aufdüsen oder Mischen auf die Körner aus geblähtem Perlit aufgetragen werden.

Bevorzugt wird der Farbstoff als Lösung zur Verfügung gestellt, bevorzug als wässrige Lösung. Eine solch wässrige Lösung des Farbstoffs kann besonders einfach auf die Körner aus geblähtem Perlit aufgesprüht werden beziehungsweise die Körner auf geblähtem Perlit besonders einfach mit einer solchen Lösung des Farbstoffs gemischt werden, um den Farbstoff jeweils auf die Körner aus geblähtem Perlit aufzutragen.

Nach dem Auftragen des Farbstoffs auf die Körner aus geblähtem Perlit können diese bevorzugt getrocknet werden, insbesondere, soweit der Farbstoff in Form einer Lösung auf die Körner aufgetragen worden ist. Bevorzugt werden die Körner bei einer Temperatur im Bereich von 30 bis 60°C getrocknet.

Die Körner mit dem darauf aufgetragenen Farbstoff können, insbesondere beispielsweise nach einer Trocknung, zu einem erfindungsgemäßen Schüttgut zusammengestellt werden. Dabei können die Körner gegebenenfalls auch mit weiteren Partikeln, beispielsweise aus weiteren Körnern aus geblähtem Perlit, die den erfindungsgemäßen Farbstoff nicht aufweisen, vermischt werden.

Gegenstand der Erfindung ist auch die Verwendung eines organischen Farbstoffs mit einer Atommasse von unter 2.000 Dalton zum Färben von Körnern aus geblähtem Perlit.

Der organische Farbstoff kann insbesondere die Merkmale des Farbstoffs des hierin beschriebenen, erfindungsgemäßen Schüttgutes aufweisen.

Die Verwendung des organischen Farbstoffs zum Färben der Körner kann insbesondere mit den Maßgaben gemäß dem erfindungsgemäßen Verfahren erfolgen.

Das erfindungsgemäße Schüttgut kann grundsätzlich auf beliebige Art und Weise verwendet werden. Bevorzugt wird das Schüttgut zu dekorativen Zwecken verwendet. Nach einer Ausführungsform wird das Schüttgut als Leichtzuschlag in einem Baustoff verwendet, insbesondere in einem Mörtel. Insoweit kann dem Mörtel durch Hinzufügen des erfindungsgemäßen Schüttgutes eine dekorative Funktion zugewiesen werden.

Gegenstand der Erfindung ist auch die Verwendung des erfindungsgemäßen Schüttgutes als Pflanzsubstrat. Bei einer solchen Verwendung dient das erfindungsgemäße Schüttgut als dekoratives Pflanzsubstrat, das seine dekorative Wirkung beispielsweise entfalten kann, indem es in transparenten Pflanzgefäßen verwendet wird. Zwar kann der Farbstoff aufgrund seiner dauerhaften Verbindung mit dem geblähten Perlit praktisch keine funktionelle Wirkung, insbesondere nicht zur Beeinflussung des Pflanzenwachstums, in dem Pflanzsubstrat entfalten. Der primäre Zweck des erfindungsgemäßen Schüttgutes liegt insoweit jedoch in seiner dekorativen Wirkung.

Weitere Merkmale der Erfindung ergeben sich aus den Ansprüchen und den nachfolgenden Ausführungsbeispielen.

Sämtliche Merkmale der Erfindung können, einzeln oder in Kombination, beliebig miteinander kombiniert sein.

Beispielhafte Ausführungsformen der Erfindung werden in den nachfolgenden Ausführungsbeispielen näher erläutert.

### Ausführungsbeispiel 1

### Geblähter Perlit

Es wurde zur Verfügung gestellt geblähter Perlit mit einer Korngröße im Bereich von >0 bis 6 mm, wobei die Korngröße bestimmt war gemäß DIN EN 13055-1.

### Farbstoff

Als Farbstoff wurde Ligninsulfonat folgender Struktur verwendet:

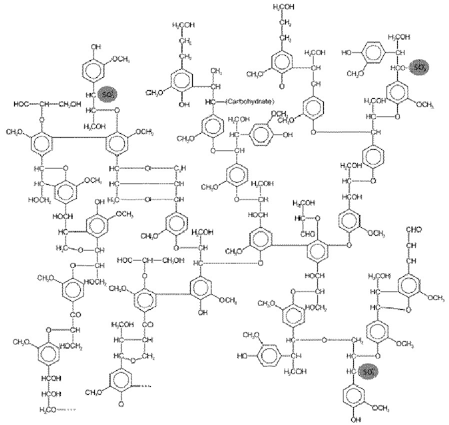

Bei Ligninsulfonat handelt es sich bekanntermaßen um einen polyzyklischen aromatischen Kohlenwasserstoff, der ein organisches Chromophor umfasst und keine durch Azogruppen verbundene Aromaten aufweist. Das verwendete Ligninsulfonat wies eine Atommasse von 543 Dalton auf. 1 Gewichtsteil einer 30%igen, wässrigen Lösung dieses Ligninsulfonats wurde mit 7 Gewichtsteilen Wasser vermischt und in Lösung gebracht. Das Ligninsulfonat wurde in Form der sich danach ergebenden Lösung für das Verfahren zur Verfügung gestellt.

### Verfahren

Der geblähte Perlit wurde in einen Zwangsmischer eingegeben und durch Aktivierung des Zwangsmischers in Bewegung versetzt.

Auf das sich im Zwangsmischer bewegende geblähte Perlit wurde anschließend allmählich die Lösung mittels eines Verspritzens über Düsen aufgetragen, bis das Massenverhältnis von im Zwangsmischer befindlichem geblähten Perlit zu der auf den geblähten Perlit aufgespritzten Lösung 1:1 betrug. Hierdurch konnte die Oberfläche des geblähten Perlits vollständig mit der Lösung benetzt werden. Der geblähte Perlit mit der darauf aufgetragenen Lösung wurde anschließend weiter im Mischer gemischt und schließlich unter weiterem Mischen bei 60°C im Mischer so lange getrocknet, bis ein Schüttgut mit einer Restfeuchte von 15 Masse-%, bezogen auf die Masse des Schüttgutes, vorlag. Dieses Schüttgut wurde schließlich aus dem Mischer ausgetragen.

### Schüttgut

Das durch das Verfahren erhaltene Schüttgut lag in Form eines Ausführungsbeispieles eines erfindungsgemäßen Schüttgutes vor. Bei diesem Ausführungsbeispiel des erfindungsgemäßen Schüttgutes bestand das Schüttgut ausschließlich aus Partikeln aus Körnern von geblähtem Perlit, dessen Oberfläche vollständig den vorbezeichneten Farbstoff in Form von Ligninsulfonat aufwies.

85 Masse-% des geblähten Perlits lagen mit einer Korngröße im Bereich von 1 bis 5 mm vor, bezogen auf die Gesamtmasse der Körner aus geblähtem Perlit mit dem darauf aufgetragenen Farbstoff.

Der Farbstoff lag in einer Konzentration von 2,0 Masse-%, bezogen auf die Masse der Körner aus geblähtem Perlit mit dem darauf aufgetragenen Farbstoff, vor.

Um die Beständigkeit des auf den geblähten Perlit aufgetragenen Farbstoffs in dem Schüttgut zu testen, wurde ein Teil des Schüttgutes auf einen Filter gelegt und mit fließendem Wasser beaufschlagt. Danach konnten keinerlei Farbstoffausblutungen festgestellt werden.

Das gemäß dem Ausführungsbeispiel erhaltene Schüttgut wurde als dekoratives Pflanzsubstrat verwendet.

### Ausführungsbeispiel 2

### Geblähter Perlit

Der geblähte Perlit entsprach dem geblähten Perlit gemäß Ausführungsbeispiel 1.

### Farbstoff

Es wurde ein Ligninsulfonat gemäß Ausführungsbeispiel 1 verwendet. 1 Gewichtsteil einer 30%igen, wässrigen Lösung dieses Ligninsulfonats wurde mit 5 Gewichtsteilen Wasser vermischt und in Lösung gebracht.

### Verfahren

Das Verfahren entsprach im Wesentlichen dem Verfahren gemäß Ausführungsbeispiel 1, wobei der geblähte Perlit im Mischer jedoch auf eine Restfeuchte von 20 Masse-% getrocknet wurde.

### Schüttgut

Auch bei dem sich danach ergebenden Schüttgut konnten bei Beaufschlagung mit Wasser gemäß Ausführungsbeispiel 1 keinerlei Farbstoffausblutungen festgestellt werden.

### Ausführungsbeispiel 3

### Geblähter Perlit

Der geblähte Perlit entsprach dem geblähten Perlit gemäß Ausführungsbeispiel 1.

### Farbstoff

50 g eines Farbstoffs in Form des Anthrachinonabkömmlings Vat Red 10 (CAS Nr 2379-79-5) folgender Struktur 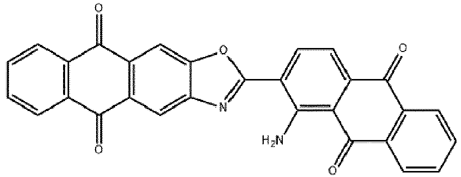 wurden in 1000 ml Wasser eingebracht und mit 15 ml Natronlauge, 38° Be (Grad Baume), und 5 g Hydrosulfit bei 60°C gerührt bis eine klare Küpe (Lösung des reduzierten Farbstoffs) entstanden war. Der Farbstoff wies eine Atommasse von 470 Dalton auf.

### Verfahren

Die klare Lösung wurde dann in einem beheizten Labormischer bei geringer Drehzahl auf 1000 g des geblähten Perlits gedüst. Im Anschluss wurde der geblähte Perlit mit einer 10%igen Wasserstoffperoxidlösung beaufschlag. Das danach erhaltene Material wurde weitere 15 min bei 40°C gemischt, wobei sich ein intensiver roter Farbton entwickelte. Nach Trocknung im Luftstrom auf 20% Restfeuchte wurde ein intensiv rot gefärbter geblähter Perlit erhalten. Das danach erhaltene Schüttgut wurde schließlich aus dem Mischer ausgetragen.

### Schüttgut

Auch bei dem sich danach ergebenden Schüttgut konnten bei Beaufschlagung mit Wasser gemäß Ausführungsbeispiel 1 keinerlei Farbstoffausblutungen festgestellt werden.

### Ausführungsbeispiel 4

### Geblähter Perlit

Der geblähte Perlit entsprach dem geblähten Perlit gemäß Ausführungsbeispiel 1.

### Farbstoff

Der Farbstoff in Form des Anthrachinonabkömmlings Alizarin (CAS Nr. 78-42-0) folgender Struktur 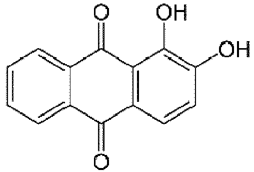 lag als eine 1%igen ammoniakalischen Lösung vor. Der Farbstoff wies eine Atommasse von 240 Dalton auf.

### Verfahren

1 Gewichtsteil geblähter Perlit wurde mit 1 Gewichtsteil der Lösung in einem Zwangsmischer besprüht. Im Anschluss daran wurde der geblähte Perlit mit 1 Gewichtsteil einer 5%igen Kaliumcarbonatlösung bedüst. Es entwickelte sich ein beständiger violetter Farbstoff auf dem geblähten Perlit, der noch auf eine Restfeuchte von 15% getrocknet wurde. Das danach erhaltene Schüttgut wurde schließlich aus dem Mischer ausgetragen.

### Schüttgut

Auch bei dem sich danach ergebenden Schüttgut konnten bei Beaufschlagung mit Wasser gemäß Ausführungsbeispiel 1 keinerlei Farbstoffausblutungen festgestellt werden.

### Ausführungsbeispiel 5

### Geblähter Perlit

Der geblähte Perlit entsprach dem geblähten Perlit gemäß Ausführungsbeispiel 1.

### Farbstoff

12 g Farbstoff des Benzanthronderivats Vat green 1 (CAS Nr. 61356-60-3) folgender Struktur 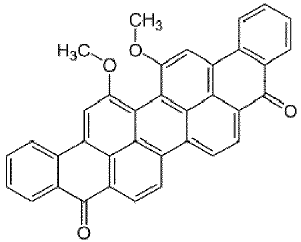 wurden in 500 ml 40° C heißem Wasser dispergiert und anschließend nacheinander 5 ml Natronlauge, 38° Be und 5 g Hydrosulfit zugegeben. Unter Rühren ging der dispergierte Farbstoff in seine Leukoform über und es entstand eine klare Lösung. Der Farbstoff wies eine Atommasse von 516 Dalton auf.

### Verfahren

Die klare Lösung wurde in einem Labormischer auf 1000 g geblähten Perlit aufgedüst. Die Temperatur wurde dabei bei 40°C gehalten. Nach dem Aufdüsen wurde das feuchte Material in einem Luftstrom langsam auf eine Restfeuchte von 10% getrocknet. Im Verlauf des Trocknungsvorgangs entwickelte sich auf dem geblähten Perlit ein intensiver Grünton. Das danach erhaltene Schüttgut wurde schließlich aus dem Mischer ausgetragen.

### Schüttgut

Auch bei dem sich danach ergebenden Schüttgut konnten bei Beaufschlagung mit Wasser gemäß Ausführungsbeispiel 1 keinerlei Farbstoffausblutungen festgestellt werden.

### Ausführungsbeispiel 6

### Geblähter Perlit

Der geblähte Perlit entsprach dem geblähten Perlit gemäß Ausführungsbeispiel 1.

### Farbstoff

1 Gewichtsteil des Farbstoffs in Form Anthrachinonabkömmlings (CAS 130-20-1) Indanthren Blau BC, Vat Blue 6 folgender Struktur 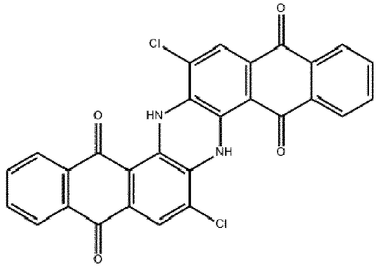 wurden mit 40 Gewichtsteilen einer wässrigen Natriumhydroxidlösung 38° Be, 2 Gewichtsteilen Natriumdithionit und 952 Gewichtsteilen Wasser versetzt. Der Farbstoff wies eine Atommasse von 511 Dalton auf.

### Verfahren

Die Lösung wurde mit 500 Gewichtsteilen geblähtem Perlit in einem Zwangsmischer versetzt. Nach homogener Durchfeuchtung düste man eine 5%ige Wasserstoffperoxidlösung auf und trocknete auf eine Restfeuchte von 20%. Man erhielt einen durchweg dunkelblau gefärbten, geblähten Perlit. Das danach erhaltene Schüttgut wurde schließlich aus dem Mischer ausgetragen.

### Schüttgut

Auch bei dem sich danach ergebenden Schüttgut konnten bei Beaufschlagung mit Wasser gemäß Ausführungsbeispiel 1 keinerlei Farbstoffausblutungen festgestellt werden.

## Patentansprüche

1. Schüttgut, umfassend die folgenden Merkmale:
1.1 Körner aus geblähtem Perlit; wobei
1.2 zumindest ein Anteil der Körner aus geblähtem Perlit einen Farbstoff aufweist; wobei der Farbstoff
1.2.1 zumindest teilweise die Oberfläche der Körner aus geblähtem Perlit bedeckt;
1.2.2 ein organischer Farbstoff ist; und
1.2.3 eine Atommasse von unter 2.000 Dalton aufweist.

2. Schüttgut nach Anspruch 1, wobei der Farbstoff eine Atommasse von unter 2.000 Dalton und von über 200 Dalton aufweist.

3. Schüttgut nach wenigstens einem der vorhergehenden Ansprüche, wobei der Farbstoff ein organisches Chromophor umfasst.

4. Schüttgut nach wenigstens einem der vorhergehenden Ansprüche, wobei der Farbstoff ein organisches Chromophor auf Basis wenigstens einer der folgenden Substanzen umfasst: polyzyklische aromatische Kohlenwasserstoffe, heterozyklische aromatische Kohlenwasserstoffe, Chinone, Naphthochinone, Polyphenole, Chinacridone, Indigoide, Dioxacine, Phtalocyanine oder Polyanilin.

5. Schüttgut nach Anspruch 4, wobei die polyzyklischen aromatischen Kohlenwasserstoffe und die heterozyklische aromatische Kohlenwasserstoffe aus der folgenden Gruppe ausgewählt sind: Naphthalin, Anthracen, Anthrachinone, Benzanthron, Isoindolin, Chinacridone, Indigoide oder Dioxazine.

6. Schüttgut nach Anspruch 5 mit polyzyklischen aromatischen Kohlenwasserstoffen in Form von Anthrachinonen.

7. Schüttgut nach wenigstens einem der Ansprüche 4 bis 6, wobei die polyzyklischen aromatischen Kohlenwasserstoffe keine durch Azogruppen verbundene Aromaten umfassen.

8. Schüttgut nach wenigstens einem der vorhergehenden Ansprüche, wobei der Farbstoff ein organisches Chromophor auf Basis wenigstens einer der folgenden Substanzen umfasst: Anthrachinone oder Polyphenole.

9. Schüttgut nach wenigstens einem der vorhergehenden Ansprüche, wobei der Farbstoff ein organisches Chromophor auf Basis von Polyphenolen umfasst.

10. Schüttgut nach wenigstens einem der vorhergehenden Ansprüche, wobei die Körner aus geblähtem Perlit den Farbstoff in einer Konzentration von höchstens 30 Masse- %, bezogen auf die Gesamtmasse der Körner aus geblähtem mit dem Farbstoff, aufweisen.

11. Schüttgut nach wenigstens einem der vorhergehenden Ansprüche, wobei der Farbstoff in Form eines Beizen-, Küpen-, Reaktiv-, Direkt-, Dispersions- oder Metallkomplexfarbstoffes auf die Körner aus geblähtem Perlit aufgetragen ist.

12. Schüttgut nach wenigstens einem der vorhergehenden Ansprüche, wobei die Körner aus geblähtem Perlit zu wenigstens 25 Masse-% eine Korngröße im Bereich von 1 mm bis 5 mm aufweisen, bezogen auf die Gesamtmasse der Körner aus geblähtem Perlit, die den Farbstoff aufweisen.

13. Verfahren zur Herstellung des Schüttgutes nach wenigstens einem der vorhergehenden Ansprüche, umfassend die folgenden Schritte:
A. Zurverfügungstellung von Körnern aus geblähtem Perlit;
B. Zurverfügungstellung eines organischen Farbstoffs mit einer Atommasse von unter 2.000 Dalton;
C. Auftragen des Farbstoffs auf die Körner aus geblähtem Perlit.

14. Verwendung eines organischen Farbstoffs mit einer Atommasse von unter 2.000 Dalton zum Färben von Körnern aus geblähtem Perlit.

15. Verwendung des Schüttgutes nach wenigstens einem der Ansprüche 1 bis 12 als Pflanzsubstrat.

## Geänderte Patentansprüche

### Geänderte Patentansprüche gemäss Regel 137(2) EPÜ.

1. Schüttgut, umfassend die folgenden Merkmale:
1.1 Körner aus geblähtem Perlit; wobei
1.2 zumindest ein Anteil der Körner aus geblähtem Perlit einen Farbstoff aufweist; wobei der Farbstoff
1.2.1 zumindest teilweise die Oberfläche der Körner aus geblähtem Perlit bedeckt;
1.2.2 ein organischer Farbstoff ist; und
1.2.3 eine Atommasse von unter 2.000 Dalton aufweist; und wobei
1.2.4 der Farbstoff ein organisches Chromophor auf Basis wenigstens einer der folgenden Substanzen umfasst: polyzyklische aromatische Kohlenwasserstoffe, heterozyklische aromatische Kohlenwasserstoffe, Chinone, Naphthochinone, Polyphenole, Chinacridone, Indigoide, Dioxacine, Phtalocyanine oder Polyanilin.

2. Schüttgut nach Anspruch 1, wobei der Farbstoff eine Atommasse von unter 2.000 Dalton und von über 200 Dalton aufweist.

3. Schüttgut nach wenigstens einem der vorhergehenden Ansprüche, wobei der Farbstoff ein organisches Chromophor umfasst.

4. Schüttgut nach wenigstens einem der vorhergehenden Ansprüche, wobei die polyzyklischen aromatischen Kohlenwasserstoffe und die heterozyklische aromatische Kohlenwasserstoffe aus der folgenden Gruppe ausgewählt sind: Naphthalin, Anthracen, Anthrachinone, Benzanthron, Isoindolin, Chinacridone, Indigoide oder Dioxazine.

5. Schüttgut nach wenigstens einem der vorhergehenden Ansprüche mit polyzyklischen aromatischen Kohlenwasserstoffen in Form von Anthrachinonen.

6. Schüttgut nach wenigstens einem der vorhergehenden Ansprüche, wobei die polyzyklischen aromatischen Kohlenwasserstoffe keine durch Azogruppen verbundene Aromaten umfassen.

7. Schüttgut nach wenigstens einem der vorhergehenden Ansprüche, wobei der Farbstoff ein organisches Chromophor auf Basis wenigstens einer der folgenden Substanzen umfasst: Anthrachinone oder Polyphenole.

8. Schüttgut nach wenigstens einem der vorhergehenden Ansprüche, wobei der Farbstoff ein organisches Chromophor auf Basis von Polyphenolen umfasst.

9. Schüttgut nach wenigstens einem der vorhergehenden Ansprüche, wobei die Körner aus geblähtem Perlit den Farbstoff in einer Konzentration von höchstens 30 Masse-%, bezogen auf die Gesamtmasse der Körner aus geblähtem mit dem Farbstoff, aufweisen.

10. Schüttgut nach wenigstens einem der vorhergehenden Ansprüche, wobei der Farbstoff in Form eines Beizen-, Küpen-, Reaktiv-, Direkt-, Dispersions- oder Metallkomplexfarbstoffes auf die Körner aus geblähtem Perlit aufgetragen ist.

11. Schüttgut nach wenigstens einem der vorhergehenden Ansprüche, wobei die Körner aus geblähtem Perlit zu wenigstens 25 Masse-% eine Korngröße im Bereich von 1 mm bis 5 mm aufweisen, bezogen auf die Gesamtmasse der Körner aus geblähtem Perlit, die den Farbstoff aufweisen.

12. Verfahren zur Herstellung des Schüttgutes nach wenigstens einem der vorhergehenden Ansprüche, umfassend die folgenden Schritte:
A. Zurverfügungstellung von Körnern aus geblähtem Perlit;
B. Zurverfügungstellung eines organischen Farbstoffs mit einer Atommasse von unter 2.000 Dalton, der ein organisches Chromophor auf Basis wenigstens einer der folgenden Substanzen umfasst: polyzyklische aromatische Kohlenwasserstoffe, heterozyklische aromatische Kohlenwasserstoffe, Chinone, Naphthochinone, Polyphenole, Chinacridone, Indigoide, Dioxacine, Phtalocyanine oder Polyanilin;
C. Auftragen des Farbstoffs auf die Körner aus geblähtem Perlit.

13. Verwendung eines organischen Farbstoffs mit einer Atommasse von unter 2.000 Dalton zum Färben von Körnern aus geblähtem Perlit mit der Maßgabe, dass der Farbstoff ein organisches Chromophor auf Basis wenigstens einer der folgenden Substanzen umfasst: polyzyklische aromatische Kohlenwasserstoffe, heterozyklische aromatische Kohlenwasserstoffe, Chinone, Naphthochinone, Polyphenole, Chinacridone, Indigoide, Dioxacine, Phtalocyanine oder Polyanilin.

14. Verwendung des Schüttgutes nach wenigstens einem der Ansprüche 1 bis 11 als Pflanzsubstrat.
